# EUROPEAN PATENT APPLICATION

(11) **EP 3 731 335 A1**
(43) Date of publication of application: **28.10.2020**
(21) Application number: 20712822.4
(22) Date of filing: 27.02.2020
(51) Int. Cl.: H01M 10/6555, H01M 10/617

(54) **BATTERY AND BATTERY PACK**

(30) Priority: 27.02.2019 CN 201920248840 U
(71) Applicant: Dongguan Amperex Technology Limited, Dongguan, Guangdong 523000 (CN)
(72) Inventor: LI, Yi, Dongguan Guangdong 523000 (CN); CHEN, Xiaoming, Dongguan Guangdong 523000 (CN)
(74) Representative: CMS Cameron McKenna Nabarro Olswang LLP
(86) International application number: PCT/CN2020/076973
(87) International publication number: WO 2020/173481

(57) **Abstract**

The present disclosure discloses a battery and a battery pack, and the battery includes a plurality of battery cells stacked together, at least two first thermal conductive components each disposed on surfaces of each battery cell, and a second thermal conductive component constituting a portion of the surface of the battery. At least two of the first thermal conductive components contact the second thermal conductive component. The battery provided by the above technical solution of the present disclosure may at least achieve balanced temperature between the plurality of the battery cells of the battery. The service life of the battery is improved.

## Description

### FIELD

The present disclosure relates to technical field of batteries, and more particularly, to a battery and a battery pack.

### BACKGROUND

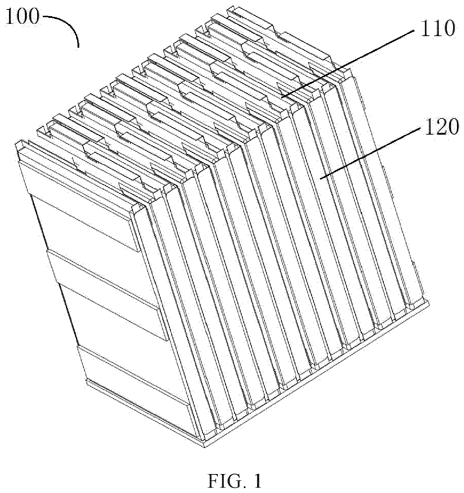

FIG. 1 shows a structural view of a conventional battery pack. As shown in FIG. 1, the battery pack 100 generally includes a plurality of battery cells 110 stacked together. A heat dissipating sheet 120 is disposed on a surface of each battery cell 110 to dissipate heat for each battery cell 110. Generally, a dozen or dozens of stacked battery cells may be included in the battery pack. Since heat is accumulated in the battery cells located at the center of the battery pack, the temperature difference between the battery cells located at the center and the battery cells located at the edge is large, which affects the service life of the battery cell. In addition, stacking a dozen or even dozens of the battery cells together may cause assembly of the battery pack to be difficult.

### SUMMARY

To overcome the above shortcomings in the related art, the present disclosure provides a battery and a battery pack, which may at least reduce the temperature difference between the battery cells at the center and the battery cells at the edge of the battery, thereby improving the service life of the battery cell.

The technical solution of the present disclosure is implemented as follows.

According to an aspect of the present disclosure, a battery is provided, which includes a plurality of battery cells stacked together; at least two first thermal conductive components, each of the first thermal conductive components disposed on a surface of one battery cell; and a second thermal conductive component constituting a portion of the surface of the battery, and at least two of the first thermal conductive components contacting the second thermal conductive component.

According to an embodiment of the present disclosure, the second thermal conductive component is U-shaped. The second thermal conductive component constitutes at least a portion of a first surface, a second surface, and at least a portion of a third surface of the battery. The first surface, the second surface, and the third surface are sequentially connected to each other.

According to an embodiment of the present disclosure, the second thermal conductive component includes a first thermal conductive sub-component and a second thermal conductive sub-component. Both the first thermal conductive sub-component and the second thermal conductive sub-component are L-shaped. The first thermal conductive sub-component constitutes the first surface and a first portion of the second surface of the battery. The second thermal conductive sub-component constitutes a second portion of the second surface and the third surface of the battery.

According to an embodiment of the present disclosure, a sum of surface areas of the first portion of the second surface and the second portion of the second surface is greater than or equal to 90% of a surface area of the second surface.

According to an embodiment of the present disclosure, at least one of the first thermal conductive components is U-shaped, and is disposed at least a portion of the first surface, the second surface, and at least a portion of the third surface of the corresponding battery cell. The first surface, the second surface, and the third surface of the battery cell are sequentially connected to each other.

According to an embodiment of the present disclosure, two of the first thermal conductive components are disposed on surfaces of adjacent two of the battery cells. The two first thermal conductive components are arranged opposed to each other, and are snap-fitted together.

According to an embodiment of the present disclosure, the battery includes a plurality of first thermal conductive components. The surface of each of the battery cell is disposed with one of the first thermal conductive components. Each of the first thermal conductive components contacts the second thermal conductive component.

According to an embodiment of the present disclosure, the battery further includes a thermal conductive adhesive disposed between the second thermal conductive component and each of the first thermal conductive components.

According to an embodiment of the present disclosure, edges of the first thermal conductive components are aligned with each other along a length direction of the battery cell.

According to an embodiment of the present disclosure, the battery further includes a buffer sheet disposed between adjacent two of the battery cells.

According to another aspect of the present disclosure, a battery pack is provided, which includes a plurality of the above batteries and a third thermal conductive component. The third thermal conductive component contacts each of the second thermal conductive components.

According to another aspect of the present disclosure, the battery pack further includes a second thermal conductive adhesive disposed between the third thermal conductive component and each of the second thermal conductive components.

According to another aspect of the present disclosure, the batteries are stacked along a thickness direction of the battery.

According to another aspect of the present disclosure, the third thermal conductive component is U-shaped. The third thermal conductive component constitutes at least a portion of a first side surface, a second side surface, and at least a portion of a third side surface of the battery pack. The first side surface, the second side surface, and the third side surface are sequentially connected to each other.

According to another aspect of the present disclosure, the battery pack further includes a second buffer sheet disposed between adjacent two of the batteries.

According to another aspect of the present disclosure, the batteries are divided into a first battery and a second battery. The first battery is at a side within the battery pack. The first battery includes a plurality of first battery cells. The second battery includes a plurality of second battery cells. The number of the first battery cells is different from the number of the second battery cells.

The beneficial effects of the present disclosure are as follows:

For the battery provided by above technical solution of the present disclosure, since at least one of the first thermal conductive components is in contact with the second thermal conductive component, the heat may be conducted between the battery cell at the edge and the battery cell at the center through the first thermal conductive component and the second thermal conductive component. The heat concentration at the center of the battery may be reduced when the battery is working. The temperature difference between the battery cell at the center and the battery cell at the edge may also be reduced, thereby improving the service life of the battery cell.

For the battery pack provided by above technical solution of the present disclosure, the heat may be conducted between the battery cell at the edge of the battery pack and the battery cell at the center of the battery pack through the heat transfer among the first thermal conductive component, the second thermal conductive component and the third thermal conductive component. The heat concentration at the center of the battery pack may be reduced when the battery is working. The temperature difference between the battery cell at the center and the battery cell at the edge may also be reduced, resulting in a balanced temperature among the battery cells, thereby improving the service life of the battery pack. On the other hand, when assembled, the battery pack may be assembled by taking each battery as a unit. Therefore, the battery pack of the present disclosure is more convenient to be assembled, and the problem that assembly and movement are difficult due to the battery pack being too heavy during the assembly process may be avoided.

### BRIEF DESCRIPTION OF THE DRAWINGS

In order to illustrate embodiments of the present disclosure or technical schemes in the prior art more clearly, the drawings which are required to be used in the description of the embodiments of the present disclosure are briefly described below. It is obvious that the drawings described below are only some embodiments of the present disclosure. It is apparent to those of ordinary skill in the art that other drawings may be obtained based on the structures shown in accompanying drawings without inventive effort.
FIG. 1 is a structural view of a conventional battery pack.
FIG. 2 is a structural view of the battery according to an embodiment of the present disclosure.
FIG. 3 is an exploded view of the battery according to an embodiment of the present disclosure.
FIG. 4a is a front view of the second thermal conductive component of the battery according to an embodiment of the present disclosure.
FIG. 4b is a side view of the second thermal conductive component of the battery according to an embodiment of the present disclosure.
FIG. 5 is a front view of the second thermal conductive component of the battery according to another embodiment of the present disclosure.
FIG. 6 is a front view of the battery including the second thermal conductive component of FIG. 5.
FIG. 7a is a front view of the first thermal conductive component of the battery according to an embodiment of the present disclosure.
FIG. 7b is a side view of the first thermal conductive component of the battery according to an embodiment of the present disclosure.
FIG. 8a is a structural view of the first thermal conductive component of the battery according to another embodiment of the present disclosure;
FIG. 8b is an exploded view of the first thermal conductive component of FIG. 8a.
FIG. 9 is a structural view of the battery pack according to an embodiment of the present disclosure.
FIG. 10 is an exploded view of the plurality of batteries of the battery pack according to an embodiment of the present disclosure.

### DETAILED DESCRIPTION

The technical schemes of the embodiments of the present disclosure will be clearly and completely described in the following with reference to the accompanying drawings. It is obvious that the embodiments to be described are only a part rather than all of the embodiments of the present disclosure. All other embodiments obtained by persons skilled in the art based on the embodiments of the present disclosure without creative efforts shall fall within the protection scope of the present disclosure. Based on the embodiments of the present disclosure, all the other embodiments obtained by those of ordinary skill in the art are within the scope of the present disclosure.

The respective exemplary embodiments in the following description and in the drawings may be combined with each other to form other embodiments not described below; and some of the components may be omitted in different embodiments. In other words, the following description does not limit the present disclosure.

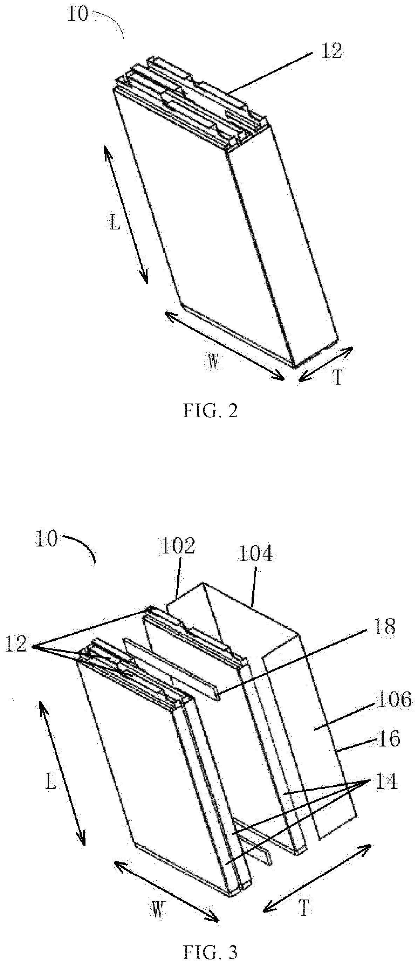

FIG. 2 shows a structural view of the battery according to an embodiment of the present disclosure. The present disclosure provides a battery 10. The battery 10 includes a plurality of battery cells 12 stacked together. The number of battery cells 12 shown in FIG. 2 is illustrative only, and the battery cells 12 may be any other suitable number.

FIG. 3 shows an exploded view of the battery according to an embodiment of the present disclosure. As shown in FIG. 3, the battery 10 of the present disclosure may further include at least two first thermal conductive components 14 and a second thermal conductive component 16. Each of the first thermal conductive components 14 is disposed on the surface of one battery cell 12. The second thermal conductive component 16 constitutes a portion of a surface of the battery 10. At least two of the first thermal conductive components 14 are in contact with the second thermal conductive component 16.

When two first thermal conductive components 14 are included, one of the first thermal conductive components 14 is disposed on the surface of the battery cell 12 at the center. The other one of the first thermal conductive components 14 is disposed on the surface of the battery cell 12 at the edge. When a plurality of first thermal conductive components 14 are included, the first thermal conductive components 14 may be disposed on the battery cells 12. The first thermal conductive components 14 can be regularly or randomly disposed on the battery cell 12 along a thickness direction T of the battery cell 12.

Thus, the heat is conducted among the battery cells 12 through the p first thermal conductive components 14 and the second thermal conductive component 16. In some embodiments, the battery cells 12 are stacked along the thickness direction T of each of the battery cells 12. The second thermal conductive component 16 shown in FIG. 3 constitutes a first side surface 102 extending along the thickness direction T of each of the battery cells 12 in the battery 10, a surface 104 extending along a width direction W, and a second side surface 106 opposite to the first side surface 102. It should be understood that the structure and dimensions of the second thermal conductive component 16 may be other suitable designs, to allow the second thermal conductive component 16 to constitute other portions of the surfaces of the battery 10, which is not limited in the present disclosure.

For the battery 10 provided by above technical solution of the present disclosure, since the first thermal conductive components 14 on the surfaces of at least two battery cell12 are in contact with the second thermal conductive component 16, the heat is conducted between the battery cell 12 at the edge and the battery cell 12 at the center through the first thermal conductive components 14 and the second thermal conductive component 16. The heat concentration at the center of the battery is reduced when the battery is working. The temperature difference between the battery cell 12 at the center and the battery cell 12 at the edge is also reduced, resulting in a balanced temperature among the battery cells 12 of the battery 10, thereby improving the service life of the battery cell.

The first thermal conductive component 14 and the second thermal conductive component 16 may be made of any suitable material having a thermal conductivity. In an embodiment, the materials of the first thermal conductive component 14 and the second thermal conductive component 16 are made of aluminum. In an embodiment, the first thermal conductive component 14 and the second thermal conductive component 16 may be made of different materials.

With reference to FIG. 3, the battery 10 of the present disclosure may further include a buffer sheet 18. The buffer sheet 18 is disposed between adjacent two of the battery cells 12 to connect the adjacent two battery cells 12. The battery cell 12 and the buffer sheet 18 may be fixedly connected by applying an adhesive on the buffer sheet 18. The buffer sheet 18 may be made of a material having a cushioning effect, such as foam. The buffer sheet 18, which connects adjacent battery cells 12 together, can reserve an expansion space for each of the battery cells.

In an embodiment, a plurality of first thermal conductive components 14 are included. The surface of each of the battery cell 12 is disposed with one of the first thermal conductive components 14. Each of the first thermal conductive components 14 contacts the second thermal conductive component 16.

In an embodiment, the battery 10 may further include a thermal conductive adhesive disposed between the second thermal conductive component 16 and each first thermal conductive component 14. In an embodiment, the thermal conductive adhesive is made of thermal grease. In some embodiments, the thermal conductive adhesive may also be mad of any other suitable thermal conductive material. The heat transfer between the first thermal conductive component 14 and the second thermal conductive component 16 may be achieved by filling the thermal conductive adhesive between the second thermal conductive component 16 and each of the first thermal conductive components 14. It should be understood that the connection and heat transfer between the first thermal conductive component 14 and the second thermal conductive component 16 may also be achieved by other suitable means.

In some embodiments, along a length direction L of each of the battery cells 12, the edges of the first thermal conductive components 14 may be aligned with each other. In some embodiments, the thickness of each first thermal conductive component 14 may be in the range of 0.2 mm to 0.5 mm, so that each first thermal conductive component 14 may have a proper thickness for achieving a good heat dissipation effect. In other embodiments, the first thermal conductive component 14 may have other suitable thicknesses depending on the actual need. In some embodiments, the first thermal conductive component 14 and the corresponding battery cell 12 may be bonded together by an adhesive. In some embodiments, the thickness of the adhesive may be in a range of 30 µm to 50 µm, for example, 40 µm, thereby a minimum heat conduction resistance on the heat transfer path and a sufficient bonding strength are obtained. In an embodiment, the thickness of the second thermal conductive component 16 may be 0.2 mm. In other embodiments, the second thermal conductive component 16 may have other suitable thicknesses.

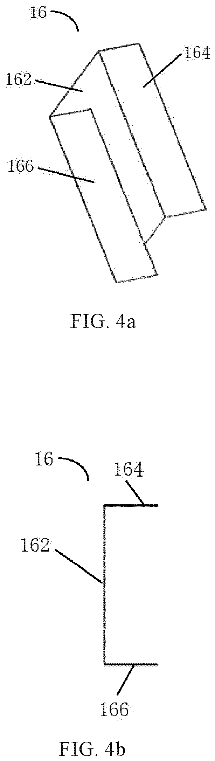

FIG. 4a and 4b are a front view and a side view of the second thermal conductive component of the battery 10 according to an embodiment of the present disclosure, respectively. In an embodiment, as shown in Figs. 4A and 4b, the second thermal conductive component 16 is U-shaped. Specifically, the U-shaped second thermal conductive component 16 includes a bottom surface 162, and a first side wall 164 and a second side wall 166 connected to opposite ends of the bottom surface 162 and opposite to each other. The U-shaped second thermal conductive component 16 constitutes at least a portion of a first surface, a second surface, and at least a portion of a third surface of the battery 10. The first surface, the second surface, and the third surface are sequentially connected to each other. That is, the first sidewall 164 and the second sidewall 166 of the second thermal conductive component 16 respectively constitute at least a portion of the first surface and at least a portion of the third surface of the battery 10. The bottom surface 162 of the second thermal conductive component 16 constitutes a second surface of the battery 10. By providing the second thermal conductive component 16 of U-shaped, the heat dissipation efficiency of the battery cells of the battery may be enhanced.

In an embodiment, as shown in FIG. 3, the first surface, the second surface, and the third surface of the battery 10 may be a first side surface 102 extending along the thickness direction T of each battery cell 12 in the battery 10, a surface 104 extending along the width direction W, and a second side surface 106 opposite to the first side surface 102. That is, the U-shaped second thermal conductive component 16 constitutes the first side surface 102, the surface 104, and the second side surface 106. In other embodiments, the second thermal conductive component 16 may constitute other surfaces of the battery 10. In an embodiment, along the thickness direction T, the lengths of the first side wall 164 and the second side wall 166 of the second thermal conductive component 16 are the same as the thickness of the battery 10, so that the second thermal conductive component 16 may obtain a larger heat dissipation area.

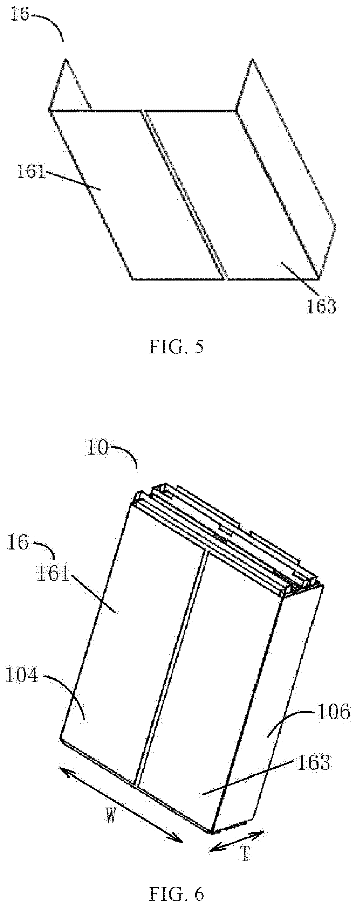

FIG. 5 shows a front view of the second thermal conductive component of the battery according to another embodiment of the present disclosure. FIG. 6 shows a front view of the battery comprising the second thermal conductive component of FIG. 5. As shown in FIG. 5, the second thermal conductive component 16 may include a first thermal conductive sub-component 161 and a second thermal conductive sub-component 163. The first thermal conductive sub-component 161 and the second thermal conductive sub-component 163 are both L-shape. As shown in FIG. 6, the first thermal conductive sub-component 161 constitutes the first surface and a first portion of the second surface of the battery 10, and the second thermal conductive sub-component 163 constitutes a second portion of the second surface and the third surface of the battery 10. In an embodiment, the first surface and the third surface may be the first side surface 102 and the second side surface 106 extending along the thickness direction T and disposed opposite to each other. The second surface may be the surface 104. That is, the second thermal conductive component 16 may constitute the first side surface 102 extending along the thickness direction T of each battery cell 12 in the battery 10, the first and second portions of the surface 104 extending along the width direction W, and the second side surface 106 opposite to the first side surface.

In an embodiment, in order to obtain a sufficiently large heat transfer area, the sum of the surface areas of the first portion of the second surface and the second portion of the second surface is greater than or equal to 90% of the surface area of the second surface. That is, the second thermal conductive component 16 may constitute at least 90% of the surface area of the surface 104.

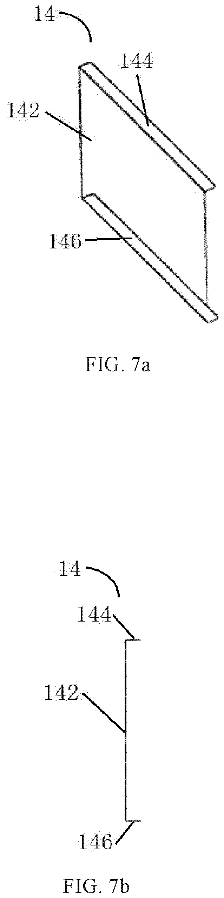

FIG. 7a and 7b are a front view and a side view of the first thermal conductive component of the battery according to an embodiment of the present disclosure, respectively. As shown in Figs. 7a and 7b, at least one of the first thermal conductive components 14 is U-shaped. Specifically, the U-shaped first thermal conductive component 14 includes a bottom surface 142, a first sidewall 144, and a second sidewall 146 opposite to the first sidewall 144. The first sidewall 144 and the second sidewall 146 extend from opposite two ends of the bottom surface 142. The U-shaped first thermal conductive component 14 is disposed on at least a portion of a first surface, a second surface, and at least a portion of a third surface of the respective battery cell 12. The first surface, the second surface, and the third surface of the battery cell 12 are sequentially connected to each other. That is, the first sidewall 144 and the second sidewall 146 of the first thermal conductive component 14 are respectively disposed on at least a portion of the first surface and at least a portion of the third surface of the battery cell 12. The bottom surface 142 of the first thermal conductive component 14 is disposed on a second surface of the battery 10. In an embodiment, referring to Figs. 3, the first surface, the second surface, and the third surface of the battery cell 12 may be respectively the first side surface 102 extending along the thickness direction T of each battery cell 12, the surface 104 extending along a width direction W, and the second side surface 106 opposite to the first side surface 102. In other embodiments, the second thermal conductive component 16 may constitute other surfaces of the battery cell 12. In an embodiment, along the thickness direction T of each battery cell 122, the lengths of the first side wall 144 and the second side wall 146 of the first thermal conductive component 14 are the same as the thickness of the battery cell 12, so that the first thermal conductive component 14 may be made to obtain a larger heat dissipation area.

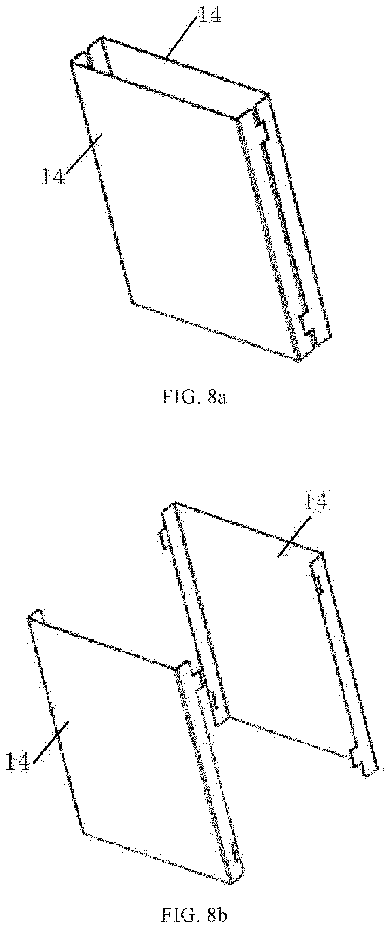

FIG. 8a shows a structural view of the first thermal conductive component of the battery according to another embodiment of the present disclosure. FIG. 8b shows an exploded view of the first thermal conductive component of FIG. 8a. As shown in Figs. 8a and 8b, two of the first thermal conductive components 14 are disposed on surfaces of adjacent two of the battery cells, and the two of the first thermal conductive components 14 are all U-shaped. The two of the first thermal conductive components 14 are opposite to each other, and are snap-fitted together, so that the adjacent two battery cells are disposed between the two first thermal conductive components 14 opposite to each other.

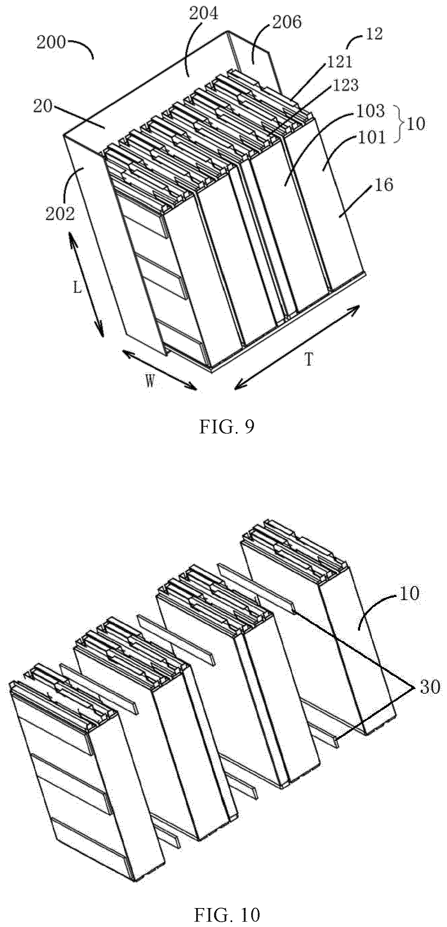

FIG. 9 shows a structural view of the battery pack according to an embodiment of the present disclosure. As shown in FIG. 9, according to an embodiment of the present disclosure, a battery pack 200 is provided, and the battery pack 200 comprises a plurality of above batteries 10. Various embodiments of the battery 10 may be applied to the battery pack 200 without being limited. The battery pack 200 may further comprise a third thermal conductive component 20, and the third thermal conductive component 20 is in contact with the second thermal conductive component 16 of each battery 10. Since the third thermal conductive component 20 is in contact with the second thermal conductive component 16 of each of the batteries 10, heat may be transferred to the third thermal conductive component 20 through the second thermal conductive component 16, and heat may be dissipated through the third thermal conductive component 20. In some embodiments, the heat dissipation method for the third thermal conductive component 20 may be any one of heat dissipation methods such as natural heat dissipation, air cooling heat dissipation, and liquid cooling heat dissipation.

For the battery pack 200 provided by above technical solution of the present disclosure, the heat is conducted between the battery cell 12 at the edge of the battery pack 200 and the battery cell 12 at the center of the battery pack through the heat transfer among the first thermal conductive component, the second thermal conductive component 16 and the third thermal conductive component 20. The heat concentration at the center of the battery pack is reduced when the battery pack is working. The temperature difference between the battery cell 12 at the center and the battery cell 12 at the edge is also reduced, resulting in a balanced temperature among the battery cells 12 in the battery pack 200, thereby improving the service life of the battery pack. On the other hand, when assembled, the battery pack is assembled taking each battery 10 as a unit. Therefore, the battery pack 200 provided by the present disclosure is more convenient to be assembled, and the problems that assembly and movement are difficult due to the battery pack being too heavy during the assembly process is avoided.

In some embodiments, the batteries 10 are divided into a first battery 101 and a second battery 103. The first battery 101 is located outside the battery pack 200. The first battery 101 includes a plurality of first battery cells 121. The second battery 103 includes a plurality of second battery cells 123. The number of the first battery cells 121 of the first battery 101 may be different from the number of the second battery cells 123 of the second battery 103. In other embodiments, the number of the first battery cells 121 of the first battery 101 may be the same as the number of the second battery cells 123 of the second battery 103. The number of battery cells 12 in each battery 10 may be set according to the temperature difference along the thickness direction T of each of the battery cells 12 during heat transfer, such that the temperature difference among the battery cells 10 in the battery pack 200 is minimized. Compared with the existing battery pack, the more the number of battery cells in the battery pack, the more excellent the effect of the battery pack provided by the present disclosure. In particular, when the battery pack is charged and discharged at a large magnification, the effect of the battery pack of the present disclosure may be exhibited.

In an embodiment, referring to FIG. 9, a plurality of batteries 10 are stacked together along the thickness direction T of each battery cell 12. The number of the batteries 10 shown in FIG. 9 is illustrative only, and the batteries 10 in the battery pack 200 may be any other suitable number. In an embodiment, along the width direction W of each battery cell 12, a plurality of other batteries stacked together may be provided. It should be understood that the batteries 10 in the battery pack 200 of the present disclosure may be arranged in any suitable manner, which is not limited in this disclosure.

In an embodiment, the battery pack 200 of the present disclosure may further include a second thermal conductive adhesive disposed between the third thermal conductive component 20 and each second thermal conductive component 16. A distance in a range of 1 mm to 2 mm is reserved between the third heat conducting component 20 and the batteries 10 to fill the second thermal conductive adhesive, so that the second thermal conductive adhesive may have a thickness in the range of 1 mm to 2 mm. Thereby, the second thermal conductive adhesive can have good contact with the third heat conducting member 20 and the batteries 10, and a sufficient compression ratio is ensured.

In some embodiments, the second thermal conductive adhesive may include thermal conductive silica gel, one-component thermal conductive mud, and two-component thermal conductive gel. In an embodiment, the second thermal conductive adhesive may be made of a silicone rubber-based material, and filled with a highly thermal conductive metal oxide or other highly thermal conductive particles in the silicone rubber to simultaneously obtain the elasticity of the silicone rubber and the thermal conductivity of the filled particles.

In an embodiment, the third thermal conductive component 20 is U-shaped. The U-shaped third thermal conductive component 20 constitutes at least a portion of a first side surface 202, a second side surface 204, and at least a portion of a third side surface 206 of the battery pack 200. The first side surface 202, the second side surface 204, and the third side surface 206 are sequentially connected to each other. In an embodiment, the first side surface 202, the second side surface 204, and the third side surface 206 of the battery pack 200 may respectively be the first side surface 202 extending along the width direction W of each battery cell 12, the second side surface 204 extending along the thickness direction T, and the third side surface 206 opposite to the first side surface 202. In other embodiments, the second thermal conductive component 16 may constitute other surfaces of the battery pack 200. In an embodiment, along the length direction L, the edge of the third thermal conductive component 20 exceeds the edge of the battery cell 12. In other embodiments, along the length direction L, the edge of the third thermal conductive component 20 may not exceed the edge of the battery cell 12. In some embodiments, the third thermal conductive component 20 may be made of any suitable material that is advantageous for heat dissipation. For example, the third thermal conductive component 20 includes any one of aluminum, stainless steel, and carbon steel.

FIG. 10 shows an exploded view of the batteries of the battery pack according to an embodiment of the present disclosure. As shown in FIG. 10, the battery pack 200 may further comprise a second buffer sheet 30. The second buffer sheet 30 is located between the batteries 10 to connect the adjacent two batteries 10 through the second buffer sheet 30. The second buffer sheet 30 may be fixedly connected to the corresponding battery 10 by providing an adhesive on the second buffer sheet 30. The second buffer sheet 30 may be made of a material having a cushioning effect such as foam. The buffer sheet 30, which connects adjacent batteries 10together, can reserve an expansion space for the battery cells.

The foregoing is only preferred exemplary embodiments of the present disclosure and is not intended to be limiting of the present disclosure, and any modifications, equivalent substitutions, improvements and the like within the spirit and principles of the present disclosure are intended to be embraced by the protection range of the present disclosure.

## Claims

1. A battery, **characterized in that**, the battery comprises:
a plurality of battery cells stacked together;
at least two first thermal conductive components each disposed on a surface of one battery cell; and
a second thermal conductive component constituting a portion of a surface of the battery, and at least two of the first thermal conductive components contacting the second thermal conductive component.

2. The battery according to claim 1, **characterized in that**, the second thermal conductive component is U-shaped, the second thermal conductive component constitutes at least a portion of a first surface, a second surface, and at least a portion of a third surface of the battery, and the first surface, the second surface, and the third surface are sequentially connected to each other.

3. The battery according to claim 1, **characterized in that**, the second thermal conductive component comprises a first thermal conductive sub-component and a second thermal conductive sub-component, and the first thermal conductive sub-component and the second thermal conductive sub-component are both L-shaped, the first thermal conductive sub-component constitutes the first surface and a first portion of the second surface of the battery, and the second thermal conductive sub-component constitutes a second portion of the second surface and the third surface of the battery.

4. The battery according to claim 3, **characterized in that**, a sum of surface areas of the first portion of the second surface and the second portion of the second surface is greater than or equal to 90% of a surface area of the second surface.

5. The battery according to claim 1, **characterized in that**, at least one of the first thermal conductive components is U-shaped, and is disposed at least a portion of the first surface, the second surface, and at least a portion of the third surface of the corresponding battery cell, and the first surface, the second surface, and the third surface of the battery cell are sequentially connected to each other.

6. The battery according to claim 5, **characterized in that**, two of the first thermal conductive components are disposed on surfaces of adjacent two of the battery cells, and the two first thermal conductive components are arranged opposed to each other and are snap-fitted together.

7. The battery according to claim 1, **characterized in that**, the battery comprises a plurality of first thermal conductive components, the surface of each of the battery cells is disposed with one of the first thermal conductive components, and each of the first thermal conductive components contacts the second thermal conductive component.

8. The battery according to claim 7, **characterized in that**, the battery further comprises a thermal conductive adhesive disposed between the second thermal conductive component and each of the first thermal conductive components.

9. The battery according to claim 7, **characterized in that**, edges of the first thermal conductive components are aligned with each other along a length direction of the battery cells.

10. The battery according to claim 1, **characterized in that**, the battery further comprises a buffer sheet disposed between adjacent two of the battery cells.

11. A battery pack, **characterized in that**, the battery pack comprises a plurality of batteries according to any one of claims 1-10 and a third thermal conductive component, and the third thermal conductive component contacts the second thermal conductive component.

12. The battery pack according to claim 11, **characterized in that**, the battery pack further comprises a second thermal conductive adhesive disposed between the third thermal conductive component and each of the second thermal conductive components.

13. The battery pack according to claim 11, **characterized in that**, the batteries are stacked together along a thickness direction of the batteries.

14. The battery pack according to claim 13, **characterized in that**, the third thermal conductive component is U-shaped, the third thermal conductive component constitutes at least a portion of a first side surface, a second side surface, and at least a portion of a third side surface of the battery pack, and the first side surface, the second side surface, and the third side surface are sequentially connected to each other.

15. The battery pack according to claim 11, **characterized in that**, the battery pack further comprises a second buffer sheet disposed between adjacent two of the batteries.

16. The battery pack according to claim 11, **characterized in that**, the batteries are divided into a first battery and a second battery, the first battery is at a side within the battery pack;
the first battery comprises a plurality of first battery cells, and the second battery comprises a plurality of second battery cells, the number of the first battery cells is different from the number of the second battery cells.
